# EUROPEAN PATENT APPLICATION

(11) **EP 2 254 190 A1**
(43) Date of publication of application: **24.11.2010**
(21) Application number: 08715640.2
(22) Date of filing: 14.02.2008
(51) Int. Cl.: H01M 10/44, H01M 10/48, H02J 7/00

(54) **TWO-WAY BATTERY CHARGER AND USE METHOD**

(71) Applicant: Vega Technologies, Ltd., Santo Domingo. (DO)
(72) Inventor: ADAMES, Fernando Emilio, Santo Domingo . Distrito. Nacional (DO)
(74) Representative: Temino Ceniceros, Ignacio
(86) International application number: PCT/DO2008/000001
(87) International publication number: WO 2009/100725

(57) **Abstract**

Bidirectional battery charger having a Power Supply (1), a Monitoring System (4), an Electromechanical System (5) connected to Main Board (2) as well as sensors which keep a constant information flow about the state of the system for the Software (3) that directs and controls the device. This charger can work either using alternating current (AC) or direct current (DC/CC) from different power sources. It acts in two directions what allows charging and discharging one or more batteries. Also, it works with a high current flow and where the drainage stored energy is particularly fast since it takes from 1 to 10 minutes.

## Description

### BACKGROUND OF THE INVENTION.

### FIELD OF THE INVENTION:

Present invention refers to electric and electronic field or branch; and particularly to a bidirectional charger for charging and discharging batteries, as well as the method for using it which allows achieving short time bidirectional charging-discharging processes without energy losses. At the same time, useful life of batteries is extended. The invention is also related to software which operates and controls the bidirectional charger, as well as the battery charging and discharging process.

### PRIOR ART DESCRIPTION:

Nowadays, energy obtained from fossil fuel, biomass (mainly wood combustion), nuclear energy and hydraulic energy covers worldwide energetic demand in more than 98%, being the fossil fuels used the most since the latter represents 75% of the energy production in the world.

Energetic problem the World is facing is mainly caused by an increase in the consumption and the known exhaustion of the non-renewable energetic resources like fossil fuels, particularly hydrocarbons, which have been used for energy generation over the years, and it is expected to get totally exhausted within the next 50 or 60 years. It has provoked an increase in the price of oil and its derivates never seen before what makes countries to invest large amounts of money for paying their oil invoices.

On the other hand, some investigations have been achieved regarding the use of other alternative energy sources like wind power, solar energy, hydro-electric power, ocean wave energy, or the energy coming from biomass; but they are not efficient due to some factors like limitations in the energy production, technological and implementation costs, and some others of different kinds. Studies have revealed that just 23% of global energy production is get out of alternative sources of energy as a consequence of listed limitations.

Then, being hydrocarbons the main source to produce energy, their use or exploitation is not efficient since 60 - 70% of their potentialities is wasted in the energy generation process.

An approach to improve this situation has resulted in the use of inverters; however, this technology has a disadvantage and it is that inverters increase many times the energy consumption in the battery charging process. Energy, due to its own nature, can not be stored in large amounts or to a large scale what emphasizes the limitation of conventional batteries in the storing process for further use. Other negative aspect is useful life of batteries which is limited and it is shortened by the conversion process when used associated to inverters.

In the state of the art it is well known inverters are devices that transform alternating current (AC) taken from different input sources into direct current (DC) to convert this energy into stored or potential energy. This stored energy can be used before an alternating current demand since inverters transform stored energy (DC) from batteries into alternating current (AC). There is a considerable energy leak in the process caused by conversion and it brings out negative consequences manifested in: energy consumption increment during charging process, consumption multiplies since inverter's demand is added to energy demand already installed. For example, batteries conceived for providing energy during 1 hour need 2 hours of continuous charging process. During bidirectional energy conversion process (AC-DC and DC-AC) there is leak associated to conversion that is translated into an increase of the consumption. Also, there is another limitation and it is related to the shortened useful life of batteries caused by panel deterioration due to current conversion process and storage time, since constant conversion energy executed by charger provokes a temperature increase what causes damages to batteries and reduces the useful life of batteries.

One of the best known applications of inverters is transforming alternating current (AC) from the conventional power supply grid into direct current (DC) to transform it again into alternating current (AC) to provide energy during a black out caused by generation shortfall or damages. In this case inverters are electrical back ups providing a limited supply regarding the current it can generate and time. However, inverters have started to be used associated to other energy sources like cells, solar panels, wind power generators, etc, which are alternating current (AC) suppliers, it goes through the conversion process previously described with the characteristics and limitations already mentioned and the inconvenience that not all the energy generated by those devices is used, since the unused energy can not be stored but it is dissipated.

In relation to battery chargers or battery banks, it is known in the state of the art the patent JP2003299256, publication date 2003-10-17, whose applicant is NTT DATA CORP, which claims an energy charger/discharger that has no leaks during battery charging/discharging process. However, it has an important inconvenience because it does not possess sensor to determine such important parameters like temperature in batteries. Temperature increases due to charging/discharging process what is translated into a reduction of useful life of batteries caused by the action of energy on panels. Also the lack of sensors forbid determining the exact level of energy existing in batteries, added to the fact that the discharging process is slow and there is no counter for the energy flow supplied to batteries.

Similar to the previous one is patent US5396163, whose applicant is Inco Limited and Norvik Technologies, Inc., which claims a charger for batteries and its main advantage is the no resistance to current what reduces the leak caused by resistance, and also it monitors the charging state to avoid overcharging of batteries. Nevertheless, it has an important disadvantage: it is a unidirectional charger that has no sensors to monitor temperature in batteries, besides it is a charger to be operated with a low energy flow.

Patent US6222343, publication date 2001- 04- 24, whose applicant is Milwaukee Electric Tool Corporation, claims a battery charger, a method for charging and software. Its main disadvantage: from an AC source the charger is limited to the demanded energy flow, conversion leak is increased, if the energy flow is higher than the amperage tolerated by the switch, then the charger can not function. Also the charger has no counter for energy supplied to the batteries and it is not designed to monitor the energy supplied to batteries. In addition to these points, it functions only in one direction.

Other solution to battery chargers is presented by patent US4638236, publication date 1987-01-20, whose applicant is BUSCH & CO INC AG. This patent claims a battery charger that functions with energy available in an electrical lighter of the kind of vehicles. This invention has some disadvantages: a) it is a charger that uses a low energy flow (low amperage), b) a rectifier is needed what makes charging to be slow and to have energy leak during the charging process, c) it is not a bidirectional charger, d) it does not have a counter of supplied current flow, e) charging process parameters are not monitored, f) the local vehicle battery can be discharged if it does not receive a charge from alternator when the local battery is been drained.

In the state of the art it is also known the patent US4843251, publication date 1989-06-02, whose applicant is MCSORLEY SR HARRY J. This patent claims a system to charge batteries or bank of batteries which has a main disadvantage: energy leak occurs during the energy conversion process, when energy is stored and at the moment of being delivered. Hence, energy leak duplicates. In addition, there is no monitoring of temperature what brings out the risk of panel overheating, considerably reducing their useful life. Also this is not a bidirectional charger.

It is also known in the state of the art that wind power, or solar energy are used for charging batteries, and an inverter is used to transform produced energy or alternating current (AC) into direct current (DC/CC) to be stored in batteries. An example of such kind of technology is offered in patent US5111127, publication date 1992-05-05, whose main applicant is JOHNSON WOODWARD. Said patent claims a portable power supply having a rechargeable battery, and an inverter/converter unit for conversion of DC power to AC power and vice verse. Photovoltaic panels are mounted to the frame for recharging the battery. It is easy to handle this device since it is a portable one, but it has a main inconvenience: once the battery is exhausted it can not be recharged again until panels receive sufficient light intensity as to generate needed energy to satisfy battery demands. On the other hand, the dependence of energy provided by photovoltaic panels limits the device regarding its use since it does not function with energy from other sources; also much time is required to recharge battery, in addition to the fact that part of the energy received in photovoltaic panels is not used when associated battery is totally charged and there is no storage capacity.

Technology incorporated to hybrid vehicles, electric current, can be obtained from the conventional supplier or self-generated. It tends to decrease the hydrocarbons consumption.

Patent JP10271694, publication date 1998-10-09, whose applicant is NISSAN MOTOR, claims an inverter/charger device using alternating current (AC) to charge batteries, and at the same time it monitors energy levels and temperature of an auxiliary battery in an electric car. This device allows charging auxiliary batteries and draining energy from a terminal, but it has the inconvenience that it is not a bidirectional one; that is to say, it works in only one way during the charging/discharging process of the energy coming from the auxiliary battery. Then an auxiliary output is required for drained energy. Also, the energy flow supplied by the battery is a maintenance flow of energy levels what makes the charging process to be slow. In addition to this, the discharging of the battery to the terminal is a slow process what causes the system to be inefficient.

Patent US6847127, publication date 2005-01-25, whose applicant is HYUNDAI MOTOR CO LTD, claims a system and method for controlling power distribution of a fuel cell hybrid electric vehicle. This kind of vehicle can work using fuel contained in its cell or using energy stored employed by its electrical motor. However, this kind of device, at least the ones known in the market, is designed to feed from alternating current (AC) supplied by the conventional energy grid. This energy is transformed into direct current (DC/CC) and stored in batteries or in other case, the electric car auto generates the energy required for its functioning. However, it has not designed to generate energy to be stored in banks of batteries or to be provided to the conventional electro-energetic system.

On the other hand, patent JP11178234, published on 1999-07-02, whose applicant is NISSAN MOTOR, claims an electrical energy supply system from a vehicle that can be useful when breakdowns or shortfall in supply of the conventional grid occurs. By means of this device the electrical vehicle can supply energy to the house. However, it is limited by different aspects like the fact that if breakdowns or shortfall in supply extends it may cause the batteries of the vehicle to discharge completely. The other limitation is related to the fact that if it is necessary to disconnect the vehicle, then the house is powerless, since the objective is not to drain batteries from the vehicle to the available batteries in the house, but to provide energy directly from the batteries of the electric vehicle to the house. It is important to have in mind that almost generally this kind of vehicle is supplied with alternating current (AC) from the conventional grid and it is stored in its batteries in the form of direct current (DC).

Also, it is known in the state of the art that an alternator of an inner combustion vehicle is device used to charge local batteries for the vehicle itself using alternating current (AC) generated by the alternator. After being rectified, the energy is stored in the battery in the form of direct current (DC/CC) to satisfy the energetic demands of the vehicle. Yet, the most common use of the alternator is based on charging the battery, and once it is charged the alternator generates the charge required to keep particular charge levels in the batteries according to demand, what could be used almost constantly to generate alternating current (AC) to be transformed into direct current (DC) and stored in batteries for further use. In addition, alternators are used to provide energy for mobile houses. It is stored in local or auxiliary batteries for further use. This is a variant of use tending to optimize fuel consumption in vehicles.

Patent CA2157642, publication date 1996-03-07, whose inventors are PROCTOR RICHARD L, KAHLE STEVEN H, STOKES WARREN D y YOUNG RICHARD H JR; claims a monitoring system that controls an alternator to charge batteries and to determine the amperage and voltage levels present in batteries by means of a sensor. This device has a main disadvantage and it is that sensor is limited to measure only the current flow without showing temperature values registered in panels during charging process. This is particularly important when you desire to extend useful life of batteries.

Patent JP9201075, which publication date is 1997-07-31 and whose applicant is TAJIRI YOSHIHIRO, claims a system that uses 100 volts alternating current (AC) as an emergency power supply in emergency and to use the power supply for outdoors and places where energy supply is not available. The system comprises an inverter attached to an automobile for private use so as to be DC/AC- converter and the power supply of 100V AC. This system, indeed, represents a solution for emergencies, but its main deficiency is its limitation regarding slow charging/discharging speed of batteries, the lack of a temperature sensor to register this parameter in battery panels which increases due to energy flow during charging process what affect directly the useful life of batteries.

It is widely known that energetic problem, particularly everything related to hydrocarbons, is a priority to be solved. It can be stated humankind has not been wise regarding the methods to exploit all potentialities of this important energy source. This takes us to think about a technological oriented solution not only to make the best of its potentialities, but to extend the useful life of oil fields. Charging/discharging processes would be fast and efficient, and then it is possible to take advantage of installed facilities in the energy production process. This represents a feasible solution, which is necessary for actual conditions at this moment.

### DESCRIPTION OF THE INVENTION:

Objective of this invention refers to a bidirectional charger of the kind used to charge/discharge batteries and works from an energy input/output demand. It has a Power Supply (1), a Main Board (2), Software (3), Monitoring System (4), and Electromechanical System (5).

Figures description:

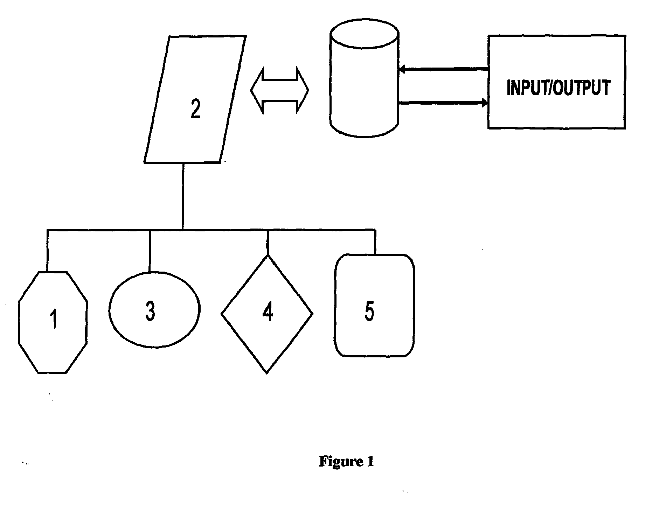

Figure 1 is an overview of the bidirectional charger diagram showing the modules that constitute it.
Figure 2 shows a schematic of the bidirectional charger where modules comprising it can be appreciated as well as their distribution.
Figure 3 is a block diagram of operations performed by the program or software that controls the operations of the bidirectional charger device.

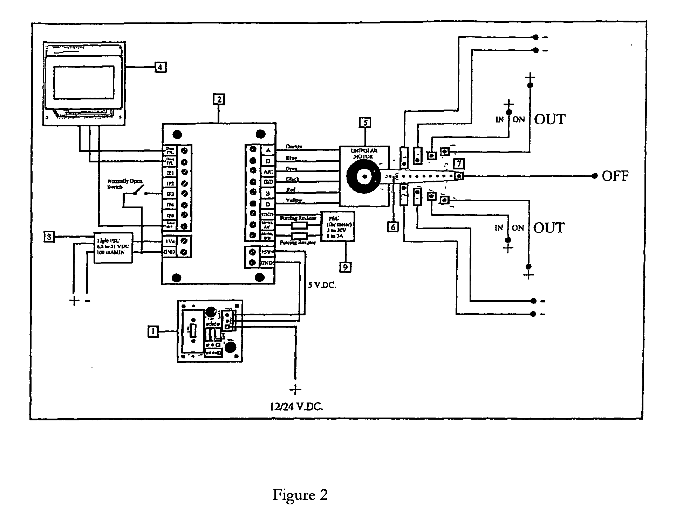

The bidirectional charger is activated by voltage supplied by one or several 12 to 24 volts DC batteries, which is regulated by a Power Supply (1) that limits the voltage to 5 volts direct current (DC) and reduces the current, so Main Board (2) can be activated, as shown in Figure 2.

After supplying 5 volts direct current (DC), Main Board (2) activates the processor to run the Software (3) and set Electromechanical System (5) in position ready to work and begin to gather information from sensors (S1, S2, S3 and S4), where: S1 is used to check the position conditioning state 1 that is the state where it is the direction of the charge depending on the batteries state. S2 is used to check the position conditioning state 2 in order to determine the direction of charge or discharge depending on the state of the batteries. Then, functioning state will condition the direction of charging or discharging to the battery with lowest level of charge. So, if charge of S1 is greater than charge of S2 or vice versa, then software will order a change in wiring bridges of poles, allowing them to operate in either direction. S3 measures temperature in the wiring and S4 indicates the status of current demand, as shown in Figure 2.

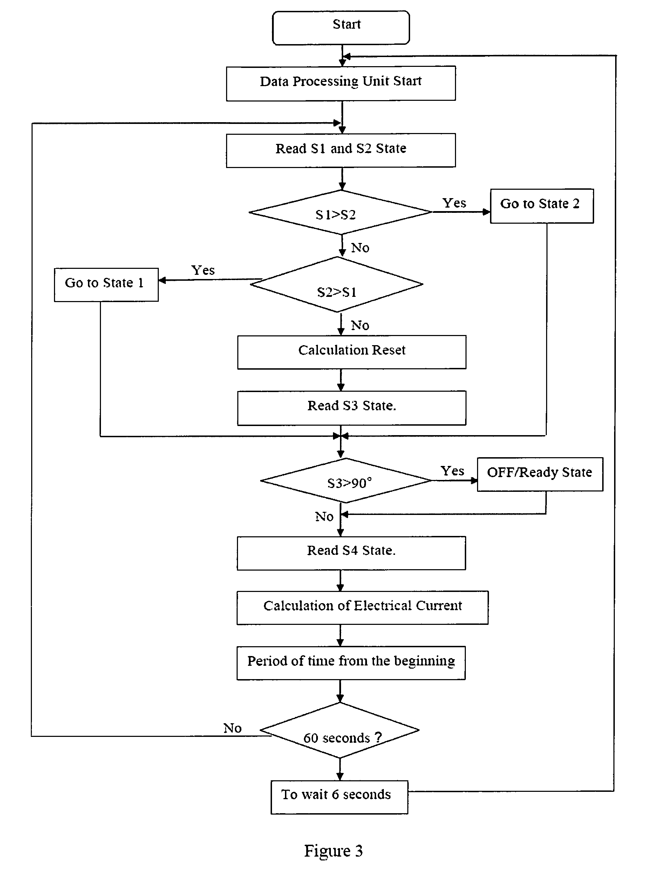

Software (3), firstly, performs a general check of the system starting automatically by placing the electromechanical system (5) in position ready to work. From the information supplied by the sensors S1 and S2, it is determined the state of work (state 1 and state 2) in terms of directing the flow or current flow. Software (3) obtains information concerning the temperature of the poles of the battery wiring from sensor S3 and if it detects that there is an unusual or high temperature (below 90 degrees Celsius) in the wiring of the batteries, the software suggests the need for checking them or decreasing the supply flow during charging / discharging process of the battery to reduce the amperage or turn the system off in the unlikely event it is not enough to reduce the amperage to protect the batteries. In addition, the Software (3) shows reports regarding demands or energy inputs to operate as a demand/supply counter with the information obtained from sensor S4 about the current flow registered throughout battery charging/discharging process. A view of sensors location is shown in Figure 2 and the operating system of the software in Figure 3.

The system has been designed to achieve a checking or continuous reviewing in order to protect batteries. Batteries charging/discharging process begins and operates throughout 60 seconds. During this time the system is constantly receiving information from its sensors and every 6 seconds it stops to allow wiring dissipates heat energy caused by the flow and batteries distribute charge received. After stopping, the system has the information about general conditions and it restarts the process again. This cycle is repeated till the process has been totally completed.

Electromechanical system (5) is composed of a servomotor that makes contact between the poles of the wires to the batteries (7) according to state 1 or state 2, for it has some copper plates (6) to make contact with such poles and according to the orders it receives from Software (3) it is determined the direction of current flow, either to supply the batteries or to demand current from batteries, causing the charger to operate in both directions.

Electromechanical system (5) is driven by Main Board (2) to which it is connected and works according to pulses emitted from the button of operations, in relation to the applied function or information provided by sensors. Electromechanical system (5) operates with power from a voltage supply (9) that delivers a varying voltage to the electromechanical system (5) from 3 to 30 v. and from 1 to 3 A. Voltage is regulated by resistances, in case the voltage supply (9) is not integrated.

Monitoring system (4), as the name implies, allows to monitor the system execution parameters, serves as an interface between the operator and the system, and lets display the operations, state of batteries, temperature in the wiring, state of current demand and information related to the energy supplied or demanded from batteries.

An embodiment to illustrate and implement the present invention, provided for illustrative and not limiting its scope, is presented below. It is aimed to illustrate how to construct a bidirectional charger and two forms of use are also provided.

Construction of a bidirectional charger implies a Power Supply that can be BUK100 DC Converter. It comprises: a LM2575WVT in position U201, a 100 uf 25 v. capacitor in position C201, a 220 uf 25 v. capacitor, a 330 mh coil in position R201 and R202; and a diode (D01) in position D201.

A Main Board that could be of the kind of ES3000 model can be used. Power Supply is fed with 5 volts from a battery and is connected to CN7 port of Main Board in order to provide energy. Sensors S1, S2, S3 and S4 are connected to Main Board ES3000 in the following way:
- Sensor S1 is connected to IP1 port.
- Sensor S2 is connected to IP2 port.
- Sensor S3 is connected to IP3 port.
- Sensor S4 is connected to IP4 port.

Then electromechanical system (5) is connected to A, D, A / C, B / D, B, D ports of the Main Board (2). M + VE-AC, M + VE-BD and GND ports of the Main Board (2) are the inputs or voltage supply for the electromechanical system in a range between 3 and 30 v. and between 1 and 3 A. Voltage is regulated by coils if the voltage supply (9) does not have integrated a regulator. Copper plates (6) are placed in the electromechanical system (5). They make contact with poles (7) of one of the battery wires functioning as bridge. The battery poles are connected to copper plates (6) placed on the electromechanical system (5) and according to the connection bridge established by the Software (3) from the information received from sensors ( S1 and S2), batteries are charged or discharged, giving this aspect the bidirectional nature to charger, all of it is shown in Figure 2.

Then monitoring and control system is connected. It can be done using an LCD display, for example a Tex/Bar-Graph PLED Display model, which is connected to DOUT TTL and BUSY O/P ports of the Main Board (2) already mentioned. All functions of the system can be monitored and are issued by Main Board (2) what acts as an interface with the system operator.

Once all modules integrated to Main Board (2) are entered in a box or case, device is ready, but to make it functions it is necessary to activate the Software (3) which is downloaded from a computer or similar device through a RS232 serial port that Main Board has (2). Thus, bidirectional charger is programmed and ready to work.

To use the bidirectional charger from a car alternator as a power source, it is necessary to place a bank of additional batteries, for example two additional 12-volt batteries interconnected can be placed in the trunk. These batteries are connected to the charger and it is connected to the vehicle local battery. Charger receives direct current DC / DC from local battery and this current goes to auxiliary batteries according to their demand (an estimated charging time ranging from 30-40 minutes for batteries to be completely discharged). The alternator continues functioning if the re is a demand from charger to local battery until the latter is completely charged. Once auxiliary batteries have been charged of energy, charger stops to demand energy to vehicle local battery. Similarly, alternator stops to supply energy to local battery once it is full of energy, and it sends only a maintenance voltage to the battery. Both batteries of 12 volts 200 amp represent approximately 4800 watts / hr of energy which is stored and used. Later, they can be discharged or drained using the same charger to another external battery bank (eg the battery bank of a house, an industry, a power plant using a bank of batteries, the conventional electro-energetic system, among others, without limiting the scope of its applications) which takes from 1 to 10 minutes for the discharging process. Once auxiliary batteries have been discharged, they are ready to be charged once again.

If the starting energy source is a different one, for example the energy provided by a solar panel or a wind power system, the bidirectional charger is just connected to the batteries of the solar panel or wind power system and to batteries to be charged. Charger demands energy from solar panel or wind power system until auxiliary batteries are charged, and it drains them. Undoubtedly, the implementation of bidirectional charger optimizes useful periods of these systems. For example, a solar panel or wind power system commonly generates current while conditions are suitable what allows it to charge their batteries. However, once batteries are charged, the system is not efficient since energy that might be generated is not used. Then, energy dissipation devices are installed to these systems. If a charger similar to which has been claimed is attached to these systems, then generated energy could be used efficiently. So if it includes a charger as the one claimed in this patent, then it might take advantage of energy generated by the solar panel or wind power system proceeds by storing energy in a bank of batteries that could then be drained in just few minutes.

Another potential application of the bidirectional charger, given for illustrative and not limiting its scope, is to drain the energy stored in a battery or bank of batteries to another battery or bank of batteries that needs energy. In this case the charger, according to the diagram of operation described in details before in this specification, drains the energy stored in the battery or bank of batteries for the battery or bank of batteries having energy deficit, in a period of time from 1 to 10 minutes.

## Claims

1. Bidirectional battery charger and method of use, which has a Power Supply (1), a Main Board (2), a software or program (3), a Monitoring System (4) and Electromechanical System (5).

2. Bidirectional battery charger and method of use, according to CLAIM NUMBER 1, **characterized by** Main Board (2) being connected to a Power Supply (1), a Monitoring System (4) or Electromechanical System (5) and is activated by an operating system or software (3).

3. Bidirectional battery charger and method of use, according to CLAIM NUMBER 1 and 2 **characterized by** the Power Supply (1) provides direct current (DC) needed to operate the Main Board (2).

4. Bidirectional battery charger and method of use, according to CLAIM NUMBER 1 and 2 **characterized by** sensor S1 being connected to Main Board (2) by one of its ports. This sensor is used to check the position that determines the state 1 where the direction of the charge is determined based on the state of batteries.

5. Bidirectional battery charger and method of use, according to CLAIM NUMBER 1 and 2, **characterized by** sensor S2 being connected to Main Board (2) by one of its ports. This sensor is used to check the position that determines the state 1 where the direction of the charge is determined based on the state of batteries.

6. Bidirectional battery charger and method of use, according to CLAIM NUMBER 1 and 2 **characterized by** sensor S3 being connected to Main Board (2) by one of its ports. This sensor registers the information related to temperature of batteries wiring poles.

7. Bidirectional battery charger and method of use, according to CLAIM NUMBER 1 and 2 **characterized by** sensor S4 being connected to Main Board (2) by one of its ports. This sensor gathers information about current flow during charging/discharging process.

8. Bidirectional battery charger and method of use, according to CLAIM NUMBER 1, 2 **characterized by** an electromechanical system (5) which has copper plates (6) that function as a contact bridge between the poles (7) of battery wires.

9. Bidirectional battery charger and method of use, according to CLAIM NUMBER 1, **characterized by** operating in two directions during battery charging/discharging process.

10. Bidirectional battery charger and method of use, according to CLAIM NUMBER 1, wherein the process of draining the batteries takes about 1-10 minutes.

11. Bidirectional battery charger and method of use, according to CLAIM NUMBER 1, wherein it can operate on alternating current (AC) from any source by using a rectifier.

12. Bidirectional battery charger and method of use, according to CLAIM NUMBER 1, wherein it can operate with direct current (DC) from any source.

13. Bidirectional battery charger and method of use, according to CLAIM NUMBER 1, **characterized by** being able to send any flow of current to the batteries without affecting their panels what increases their useful time.

14. Bidirectional battery charger and method of use, according to CLAIM NUMBER 1 and 2, wherein once the system starts the software automatically orders the eletromechanical system (5) to be placed in position ready to work.

15. Bidirectional battery charger and method of use, according to CLAIM NUMBER 1 and 2, wherein the software indicates the electromechanical system (5) the direction of the charge depending on the state of batteries from the information provided by sensor S1.

16. Bidirectional battery charger and method of use, according to CLAIM NUMBER 1 and 2, wherein the software indicates the electromechanical system (5) the direction of the charge depending on the state of batteries from the information provided by sensor S2.

17. Bidirectional battery charger and method of use, according to CLAIM NUMBER 1 and 2 wherein the software monitors temperature values in wires keeping them below 90 Celsius degrees.

18. Bidirectional battery charger and method of use, according to CLAIM NUMBER 1 and 2, wherein the software indicates either demand or supply state of current based on the information provided by sensor S4.

19. Bidirectional battery charger and method of use, according to CLAIM NUMBER 1 and 2, wherein the software directs charging/discharging process of batteries in a continuous form during 60 seconds.

20. Bidirectional battery charger and method of use, according to CLAIM NUMBER 1 and 2, wherein the software stops charging/discharging process of batteries every six seconds.

21. Bidirectional battery charger and method of use, according to CLAIM NUMBER 1 and 2 **characterized** because it has a monitoring system acting as an interface between the system and the user.
